# EUROPEAN PATENT APPLICATION

(11) **EP 1 236 597 A1**
(43) Date of publication of application: **04.09.2002**
(21) Application number: 02250580.4
(22) Date of filing: 29.01.2002
(51) Int. Cl.: B60H 1/32, B60P 3/20, B60H 1/00

(54) **Non-synchronous generator system for electrically powered trailer refrigeration unit**

(30) Priority: 15.02.2001 US 784467
(71) Applicant: CARRIER CORPORATION, Syracuse New York 13221 (US)
(72) Inventor: Wilson, James C., Cazenovia, New York 13035 (US); Barrett, Kenneth B., Jamesville, New York 13078 (US); Chopko, Robert A., Baldwinsville, New York 13027 (US)
(74) Representative: Leckey, David Herbert

(57) **Abstract**

An all electric transport refrigeration system receives its compressor drive motor power and all other electrical power from a single on-board engine driven non-synchronous power system consisting of an engine driven synchronous generator 300. The generator is able to power refrigeration system electrical components at varying predetermined controlled output frequencies that are regulated by an electronic control system 400 and independent of engine speed and generator output frequencies. The incorporation of the non-synchronous power system in the transport refrigeration system results in a system that meets space limitations while at the same time flexibly achieves the desired system performance.

## Description

### BACKGROUND OF THE INVENTION

This invention relates to an improved generator design for use on an all electric truck trailer refrigeration system that receives its compressor drive motor power and all other electrical power from a single on-board engine driven non-synchronous generator.

Transport refrigeration systems for a standardized truck trailer having on-board regulated power necessary to operate certain components such as system controls, motors and related devices are known in the art. Typically, the size of the equipment used in truck trailer refrigeration units is restricted to the limited space bounded by the tractor swing radius and the trailer front wall. In the prior art, such transport refrigeration applications have included an on-board, small power output generator or alternator and regulator apparatus which has been limited to providing power to a portion of the system power consuming apparatus, such as fan motors and system controls. On-board generators that are sufficiently large enough to simultaneously provide all the power needed by the transport refrigeration system, including the power to run compressor drive motor, have typically been too large for the available space. They would also be too heavy and too costly to consider for use in conventional transport refrigeration systems.

Generators which are small enough to meet the size and weight requirements are typically not configured to meet the overall transport refrigeration system power requirements. Synchronous generators of sufficient power capability to fully power a truck trailer transport refrigeration system have been too large, too heavy, and too costly to meet on-board size and weight requirements. Further, the output frequency of the synchronous generator is limited by engine speed or input frequency.

European Patent Application EP-A-1046524 entitled "Transport Refrigeration Unit With Synchronous Generator Power System" relates to a somewhat compact, lightweight, all electric transport refrigeration system with on-board electrical power generating capacity which is capable of providing sufficient power to simultaneously supply the electrical requirements of the refrigeration system compressor motor as well as all other motors and electrical devices. The disclosed generator in this application is synchronous. While such a refrigeration system does not exceed the spatial boundaries presently imposed by more conventional transport refrigeration systems, it would never the less be desirable to design a transport refrigeration system with a generator that is compact in design while meeting on-board system individual electrical power requirements. Further, a compact generator design would result in a lighter weight and less costly transport refrigeration system.

Therefore, it would be desirable to design a transport refrigeration system with a non-synchronous power system that may provide the entire motor and control system power for the refrigeration system while at the same time meeting required space limitations. It would further be desirable to operate the driven electrical elements of the refrigeration system at speeds independent of engine speed, or generator output frequency.

### SUMMARY OF THE INVENTION

A transport refrigeration system is provided, which includes a compressor having at least one electric compressor drive motor positioned within the compressor. The system includes a condenser heat exchanger unit and an evaporator heat exchanger unit operatively coupled, respectively, to a compressor discharge port and a compressor suction port. A plurality of fan assemblies each having at least one electric fan motor provide air flow over the condenser heat exchange unit and the evaporator heat exchange unit. The refrigeration system includes an integrally mounted unitary engine driven non-synchronous power system whose output is regulated to operate at a desired voltage and at the desired frequency by way of an electronic control system. The compressor drive motor and the fan motors are configured to be directly coupled to the non synchronous power system and to operate at voltages and frequencies that are independent of the output frequency of the synchronous generator, or engine speed, and that is regulated by an electronic control system. The non synchronous generator system of the present invention is able to assume a relatively small profile and is less costly in design as compared to the prior art synchronous generator configurations used in on-board refrigeration systems.

The unique characteristics of the non-synchronous power system as employed in the present invention results in a novel transport refrigeration system of reduced size and weight. Further, the nature of the non-synchronous power system design allows for greater flexibility with respect to being able to operate the compressor and the fan motors at speeds independent of the engine speed of generator output frequency. Further, such operation will allow optimization of the refrigeration system efficiency.

These and other features of the present invention can be best understood from the following specification and drawing, the following of which is a brief description.

### BRIEF DESCRIPTION OF THE DRAWINGS

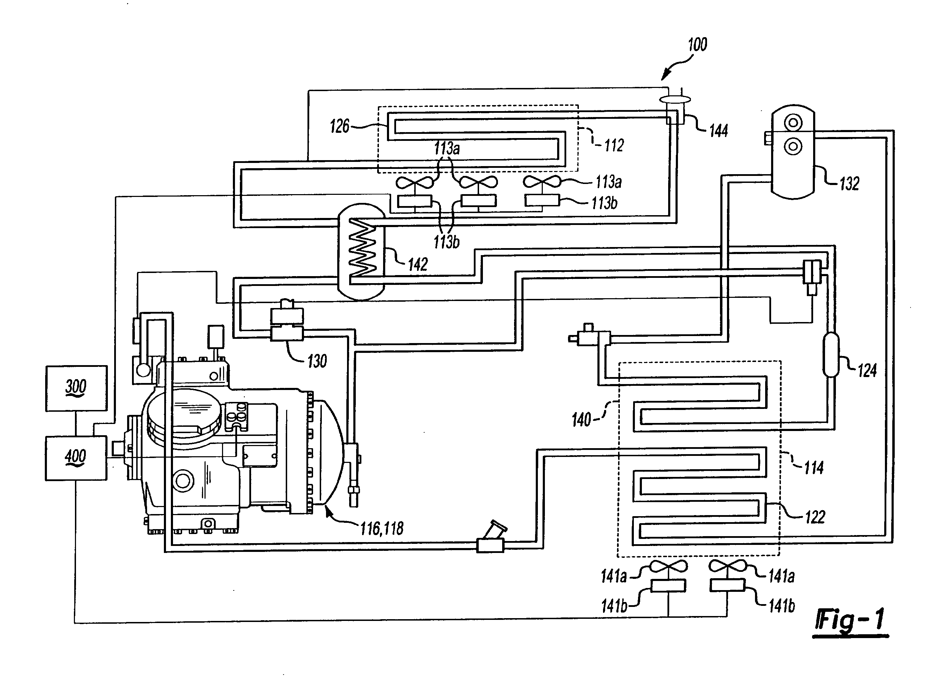

Figure 1 is a schematic diagram illustrating a trailer refrigeration system having a compressor with an integrated electric drive motor powered by a non-synchronous power system in accordance with an embodiment of the present invention.

### DETAILED DESCRIPTION OF A PREFERRED EMBODIMENT

Referring to Figure 1, a trailer refrigeration system 100 is schematically illustrated with a compressor 116. The compressor 116 has the compressing mechanism, an electric compressor motor 118 and an interconnecting drive shaft all sealed within a common housing. A suitably designed synchronous permanent magnet generator 300 is provided that is capable of fully powering the internal electric motor 118 of the compressor as well as satisfying the electrical requirements of condenser fan motors 141b and evaporator fan motors 113b at varying predetermined controlled system output frequencies which are regulated by electronic control system 400.

Operation of the refrigeration system 100 can best be understood by starting the compressor 116, where the refrigerant enters the compressor and is compressed to a higher temperature and pressure. Refrigerant gas then moves into the air-cooled condenser 114. Air flowing across a group of condenser coil fins and tubes 122 cools the gas to its saturation temperature. The air flow across the condenser is energized by one or more condenser fans 141a powered by condenser fan motors 141b. By removing latent heat, the gas condenses to a high pressure/high temperature liquid and flows to a receiver 132 that provides storage for excess liquid refrigerant during low temperature operation. From the receiver 132, the liquid refrigerant passes through a subcooler heat exchanger 140, through a filter dryer 124 that keeps refrigerant cool and dry, then to a heat exchanger 142 that increases the refrigerant subcooling, and finally to a thermostatic expansion valve 144.

As the liquid refrigerant passes through the orifice of the expansion valve 144, some of it vaporizes into a gas. Return air from the refrigerated space flows over the heat transfer surface of the evaporator 112. As refrigerant flows through the tubes 126 in the evaporator 112, the remaining liquid refrigerant absorbs heat from the return air, and in so doing, is vaporized. The air flow across the evaporator is energized by one or more evaporator fans 113a powered by evaporator fan motors 113b. The vapor then flows through a suction modulation valve 130 back to the compressor 116 and integral drive motor 118. A thermostatic expansion valve bulb or sensor is preferably located on the evaporator outlet tube. The bulb would be intended to control the thermostatic expansion valve, thereby controlling refrigerant super-hearting at the evaporator outlet tubing. This is better described in the above-referenced prior applications, and forms no portion of this invention.

Essentially, a non-synchronous power system is able to modify the output frequency and voltage from that which would otherwise be dictated in a synchronous generator by the input speed of the engine. Appropriate electronic controls, which are well within skill of a worker in this art would take the electrical frequency and voltage generated at the generator, and modify them prior to being delivered to the compressor and/or the fan motors. In this way, a particular voltage and frequency can be provided to each of the individual components in the system which is best suited for the components' operational requirements.

It should be understood that although the present invention has been described as useful in transport refrigeration systems, those of skill in the art will readily understand and appreciate that the present invention has substantial use and provides many benefits in other types of refrigeration systems as well.

It has been shown that the unique features of the non-synchronous power system coupled with the appropriate compressive mechanism and electric compressor motor results in a transport refrigeration system that affords the desired size, weight, and cost requirements while meeting overall transport refrigeration system power requirements. It is to be further noted that the incorporation of the synchronous permanent magnet generator into the transport refrigeration system affords greater flexibility as it allows the compressor motor, condenser fan motor, and evaporator fan motor to operate at speeds independent of the engine speed.

While the specifically disclosed generator is a permanent magnet generator, this invention would extend to systems utilizing other types of generators.

A preferred embodiment of this invention has been disclosed. However, a worker of ordinary skill in this art would recognize that certain modifications would come within the scope of this invention. For that reason, the following claims should be studied to determine the true scope and content of this invention.

## Claims

1. A transport refrigeration system comprising:
a compressor (116) having an electric drive motor (118) disposed therein for running said compressor;
a condenser heat exchanger unit (114) operatively coupled to said compressor (116);
an evaporator heat exchanger unit (112) operatively coupled to said compressor (116);
a plurality of fan assemblies (113a, 141a) each having at least one electric fan motor (113b, 141b) configured to provide air flow over said condenser heat exchanger unit (114) and said evaporator heat exchanger unit (112); and
an integrally mounted unitary engine driven non-synchronous power system consisting of a synchronous generator (300) and a plurality of electronic control systems (400) configured to directly power said compressor drive motor (116) and said fan motors (113b, 141b) at predetermined frequencies.

2. A transport refrigeration system as recited in Claim 1, wherein:
said integrally mounted unitary engine driven synchronous generator assembly is provided with an electronic control system (400) that regulates the output frequency of said synchronous generator assembly so that said compressor drive motor (116) and said fan motors (113b, 141b) may operate at a plurality of frequencies independent of the output frequency of said synchronous generator assembly.

3. A transport refrigeration system as recited in Claim 1 or 2, wherein said generator (300) is a permanent magnet generator.

4. A transport refrigeration system comprising:
a compressor (116) having an electric drive motor (118) disposed therein for running said compressor;
a condenser heat exchanger unit (114) operatively coupled to said compressor (116);
an evaporator heat exchanger unit (112) operatively coupled to said compressor (116);
a plurality of fan assemblies (113a, 141a) each having at least one electric fan motor (113b, 141b) configured to provide air flow over said condenser heat exchanger unit (114) and said evaporator heat exchanger unit (112); and
an integrally mounted unitary engine driven synchronous generator assembly (300, 400) configured to directly power said compressor drive motor and said fan motors at predetermined frequencies that are regulated by an electronic microprocessor control system to achieve optimum system performance.

5. A transport refrigeration system as recited in Claim 4, wherein said generator (300) is a permanent magnet generator.

6. A refrigeration system comprising an electrically powered compressor and at least one electrically powered fan assembly, a synchronous generator (300) and an electronic control system (400) for powering said compressor and fan at predetermined frequencies.
